# EUROPEAN PATENT APPLICATION

(11) **EP 4 557 448 A2**
(43) Date of publication of application: **21.05.2025**
(21) Application number: 24208552.0
(22) Date of filing: 24.10.2024
(51) Int. Cl.: H01M 10/42, H01M 10/48, H01M 50/204, H01M 50/242, H01M 50/249, H01M 50/502

(54) **POWER BATTERY SYSTEM**

(30) Priority: 30.10.2023 CN 202322927597 U; 26.08.2024 WO PCT/CN2024/114470
(71) Applicant: Eve Energy Co., Ltd., Huizhou, Guangdong 516006 (CN)
(72) Inventor: HU, Wenbin, Huizhou, Guangdong 516006 (CN)
(74) Representative: Murgitroyd & Company

(57) **Abstract**

The present application provides a power battery system, which relates to the technical field of power batteries. By arranging the busbar on the battery pack in the accommodating cavity inside the system battery module, it improves the connection when the two sides of the system battery module are collided. The high-voltage busbar between the battery management system and the external interface of the system battery module and located on both inner side walls of the system battery module is short-circuited. The power battery system includes a battery case and a system battery module fixed inside the battery case. The system battery module includes a plurality of battery packs. Adjacent battery packs are spaced apart to form accommodating cavities and the busbar connected between the adjacent battery packs is located in the accommodating cavity.

## Description

### TECHNICAL FIELD

The present application relates to a technical field of power batteries, and in particular, to a power battery system.

### BACKGROUND

In an electrical design of the power battery system in related technologies, high-voltage busbars and busbars on the battery are arranged on a side of a system battery module. Once a vehicle has got a side collision and squeezes the system battery module, it is easy to cause a short circuit. The short circuit causes the system battery module to be damaged and be unable to provide power to the vehicle.

### SUMMARY

In view of the above, the present application provides a power battery system, the power battery system is used to improve the problem of short-circuiting, when both sides of the system battery module are collided, of high-voltage busbars connected between the battery management system and an external interface of a system battery module and provided on the two inner side walls of the system battery module, by means of arranging a busbar arranged on a system battery module in an accommodating cavity defined inside the system battery module.

The technical solutions adopted by the present application to solve the above technical problems are as follows.

The present application provides a power battery system, the power battery system includes a battery case and a system battery module fixed inside the battery case. The system battery module includes a plurality of battery packs. Adjacent battery packs are connected through busbars. The adj acent battery packs are spaced apart to form accommodating cavities. The busbar connected between the adjacent battery packs is located in the accommodating cavity.

In some embodiments of the present application, the power battery system further includes a battery energy distributing module connected to the system battery module and an interface component provided on a surface of the battery case. The interface component is connected to the battery energy distributing module. The interface component includes a first front-drive positive interface, a first front-drive negative interface, a first rear-drive positive interface, a rear-drive negative interface, a first charging positive interface, and a first charging negative interface.

The battery energy distributing module, the first rear-drive positive interface, the first rear-drive negative interface, the first charging positive interface, and the first charging negative interface are located at one end of the system battery module. The first front-drive positive interface and the first front-drive negative interface are located at another end of the system battery module. The battery energy distributing module, the first front-drive positive interface, and the first front-drive negative interface are connected through a connecting row. The connecting row is located in the accommodating cavity.

In some embodiments of the present application, the battery energy distributing module includes a positive battery energy distributing unit and a negative battery energy distributing unit. The positive battery energy distributing unit is arranged adjacent to and connected to a positive electrode of the system battery module. The negative battery energy distributing unit is arranged adjacent to and connected to a negative electrode of the system battery module.

In some embodiments of the present application, the positive battery energy distributing unit is provided with a second positive charging interface, a second positive rear-drive interface, and a second front-drive positive interface. The second charging positive interface is set toward the first charging positive interface. The second rear-drive positive interface is set towards the first rear-drive positive interface. The second front-drive positive interface is set towards the first front-drive positive interface.

In some embodiments of this application, the negative battery energy distributing unit is provided with a second negative charging interface, a second negative rear-drive interface, and a second front-drive negative interface. The second charging negative interface is set toward the first charging negative interface. The second rear-drive negative interface is set toward the first rear-drive negative interface. The second front-drive negative interface is set toward the first front-drive negative interface.

In some embodiments of this application, the first rear-drive positive interface and the first charging positive interface are located on one side of the positive battery energy distributing unit away from the first front-drive positive interface. The first rear-drive negative interface and the first charging negative interface are located on one side of the negative battery energy distributing unit away from the front-drive negative interface.

In some embodiments of the present application, the power battery system further includes a battery management system control unit. The battery management system control unit includes a battery management system main control module, a acquisition interface of any one or a combination of voltage and temperature, and a plurality of battery management system slave control modules. The acquisition interface of any one or a combination of voltage and temperature is provided outside the plurality of the battery packs. The acquisition interface of any one or a combination of voltage and temperature and the plurality of the battery management system slave control modules are located in the accommodating cavity. The battery management system slave control module is communicatively connected to the acquisition interface of any one or a combination of voltage and temperature. The plurality of the battery management system slave control modules are communicatively connected to the battery management system main control module.

In some embodiments of the present application, the adjacent battery management system slave control modules are communicatively connected to each other. One of the plurality of the battery management system slave control modules is communicatively connected to the battery management system main control module.

In some embodiments of the present application, the acquisition interface of any one or a combination of voltage and temperatures of the adjacent two of the plurality of the battery packs are located in the same accommodating cavity and connected to the same battery management system slave control module. The acquisition interface of any one or a combination of voltage and temperatures are located on opposite sides of the battery management system slave control module.

In some embodiments of the present application, the battery energy distributing module includes a positive battery energy distributing unit and a negative battery energy distributing unit. The battery management system main control module is disposed close to the negative battery energy distributing unit.

In some embodiments of the present application, the positive battery energy distributing unit is communicatively connected to the negative battery energy distributing unit. The battery management system main control module is disposed on one side of the negative battery energy distributing unit away from the positive battery energy distributing unit. The battery management system main control module is communicatively connected to the negative battery energy distributing unit.

In some embodiments of the present application, the negative battery energy distributing unit includes a negative battery energy distributing case. A current sensor, a charging negative relay, a rear-drive negative relay, and a front-drive negative relay are distributed in the negative battery energy distributing case. One end of the current sensor is connected to the negative electrode of the system battery module. The other end of the current sensor is connected to one end of the charging negative relay, the rear-drive negative relay, and the front-drive negative relay respectively. The other end of the charging negative relay is connected to the second charging negative interface on the negative battery energy distributing unit. The other end of the rear-drive negative relay is connected to the second rear-drive negative interface on the negative battery energy distributing unit. The other end of the front-drive negative relay is connected to the negative battery energy distributing unit on the negative battery energy distributing unit.

In some embodiments of this application, the positive battery energy distributing unit includes a positive battery energy distributing case. A front-drive positive relay, a front-drive fuse, a front-drive precharge relay, a front-drive precharge resistor, a rear-drive positive relay, a rear-drive fuse, a rear-drive precharge relay, a rear-drive precharge resistor, a charging positive relay, and a charging fuse are distributed in the positive battery energy distributing case. The front-drive relay and the front-drive fuse are connected in series to form a front-drive circuit. The front-drive precharge relay and the front-drive precharge resistor are connected in series and connected to both ends of the front-drive positive relay. The rear-drive positive relay is connected in series with the rear-drive fuse to form a rear-drive circuit. The rear-drive precharge relay and the rear-drive precharge resistor are connected in series and connected to both ends of the rear-drive positive relay. The charging positive relay is connected in series with the charging fuse to form a charging circuit. The front-drive circuit, the rear-drive circuit, and the charging circuit each have one end connected in parallel with both ends of the positive electrode of the system battery module. The other ends of the front-drive circuit, the rear-drive circuit, and the charging circuit each is respectively connected to the second front-drive positive interface on the positive battery energy distributing unit, the second rear-drive positive interface on the positive battery energy distributing unit, and the second charging positive interface on the positive battery energy distributing unit.

In summary, due to the adoption of the above technical solutions, the present application at least includes the following beneficial effects.

The power battery system provided by the present application mainly connects each battery pack in the system battery module, forming an accommodating cavities between adjacent battery packs, and arranging the necessary busbars for connecting the adjacent battery packs in the accommodating cavity. The busbars replace the traditional arrangement of busbars on both sides of the system battery module, which can protect the busbars from collision and extrusion in the event of a vehicle collision, thereby ensuring the safety of the system battery module.

### BRIEF DESCRIPTION OF THE DRAWINGS

In order to more clearly illustrate the technical solutions of the embodiments of the present application, the drawings of the embodiments will be briefly introduced below. Obviously, the drawings in the following description only relate to some embodiments of the present application and do not limit the present application.
FIG. 1 is a schematic structural diagram of a power battery system provided by an embodiment of the present application.
FIG. 2 is a schematic structural diagram of a power battery system including a battery energy distributing module provided by an embodiment of the present application.
FIG. 3 is a schematic structural diagram of a power battery system including a positive battery energy distributing module and a negative battery energy distributing module provided by an embodiment of the present application.
FIG. 4 is a schematic structural diagram of a power battery system including a battery management system control unit provided by an embodiment of the present application.
FIG. 5 is a schematic structural diagram of the internal device connections of the positive battery energy distributing module and the negative battery energy distributing module provided by the embodiment of the present application.

The reference numbers are as follows: 1. Battery case; 11. first front-drive positive interface; 12. front-drive negative interface; 13. first rear-drive positive interface; 14. first rear-drive negative interface; 15. first positive charging interface; 16. The first charging negative interface; 2. system battery module; 21. battery pack; 22. busbar; 23. accommodating cavity; 3. battery energy distributing module; 31. positive battery energy distributing unit; 311. second charging positive interface; 312. second rear-drive positive interface; 313. second front-drive positive interface; 32. negative battery energy distributing unit; 321. second charging negative interface; 322. second rear-drive negative interface; 323. second precursor negative interface; 4. battery management system main control module; 41. acquisition interface of any one or a combination of voltage and temperature; 42. battery management system slave control module.

### DETAILED DESCRIPTION

The technical solutions in the embodiments of the present application will be clearly and completely described below with reference to the accompanying drawings in the embodiments of the present application. Obviously, the described embodiments are only some of the embodiments of the present application, rather than all of the embodiments. Based on the embodiments in the present application, all other embodiments obtained by those skilled in the art without making creative efforts fall within the scope of protection of this application.

In the description of the present application, it should be understood that the words "first" and "second" are only used for descriptive purposes and cannot be understood as indicating or implying relative importance or indicating the number of indicated technical features. Therefore, the features defined as "first" and "second" may explicitly or implicitly include one or more features. In the description of the present application, "plurality" means two or more than two, unless otherwise explicitly and specifically limited.

In the present application, the word "exemplary" is used to mean "serving as an example, illustration, or illustration". Any embodiment described herein as "exemplary" is not necessarily to be construed as preferred or advantageous over other embodiments. The following description is presented to enable any person skilled in the art to make and use the present application. In the following description, details are set forth for the purpose of explanation. It will be understood that one of ordinary skill in the art will recognize that the present application may be practiced without these specific details. In other instances, well-known structures and processes have not been described in detail to avoid obscuring the description of the application with unnecessary detail. Thus, the present application is not intended to be limited to the embodiments shown but is to be accorded the widest scope consistent with the principles disclosed herein.

Power batteries are the source of power for most equipment. They mainly include a battery casing and a system battery module composed of multiple battery packs connected in series or parallel. The system battery module is connected to a battery energy distributing module for driving the system battery module. It supplies power to the front-drive and rear-drive of the vehicle, and is also used to charge the driving battery module. Therefore, the battery module includes at least two charging interfaces, two front-drive power supply interfaces, and two rear-drive power supply interfaces. As an important factor affecting the function of power battery, temperature plays a very important role in power battery system. Only the use temperature of the power battery is controlled within a reasonable specific range, the electrochemical reaction in the charging and discharging process of the battery can be carried out safely and reliably. Therefore, the battery energy distributing module is also connected to a detection unit for detecting the temperature of the battery pack and connected to a control module for controlling the battery energy distributing module according to the detection results of the detection unit.

Electrical architectures of each module unit and each interface inside the battery case is very messy. In the related art, the busbars used to connect each battery pack in the system battery module are usually arranged on both sides of the system battery module inside the battery case, but such an electrical architecture is prone to crushing and damage when a vehicle collides.

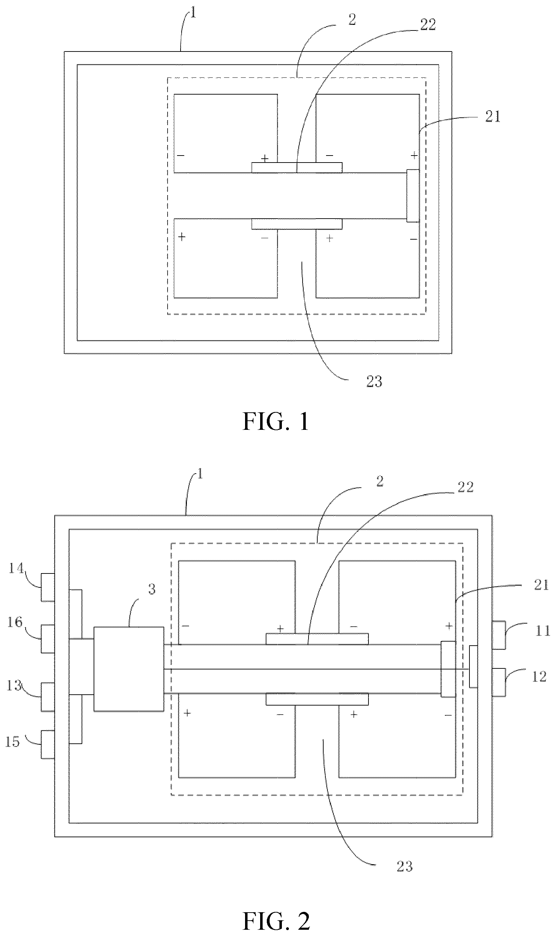

Based on the above power battery, please refer to FIG. 1, and FIG. 1 is a schematic structural diagram of a power battery system provided by an embodiment of the present application. The present application provides a power battery system. The power battery system includes a battery case 1 and a system battery module 2 fixed inside the battery case. The system battery module 2 includes a plurality of battery packs 21. Adjacent battery packs 21 are connected through busbars 22. The adjacent battery packs 21 are spaced apart to form accommodating cavities 23. The adjacent battery packs 21 are connected to each other. The busbar 22 connected between the adjacent battery packs 21 is located in the accommodating cavity 23.

It should be noted that the system battery modules 2 can adopt one of series connection and parallel connection. The busbar 22 can be a series busbar 22 or a parallel busbar 22. The busbar 22 connected between the adjacent battery packs 21 is only provided in the accommodation cavity 23 between the adjacent battery packs 21 to protect the busbar 22 from crushing and collision.

For example, there are four battery packs 21 of the same or different models in the system battery module. The four battery packs 21 includes a first battery pack 21, a second battery pack 21, a third battery pack 21, and a fourth battery pack 21. The positive and negative electrodes of the first battery pack 21, the second battery pack 21, the third battery pack 21 and the fourth battery pack 21 are sequentially connected in series through a series busbar 22 to form a system battery module 2. Generally speaking, the series busbar 22 is located on one side of the adjacent battery packs 21. The series busbar 22 in the present application is located in the accommodation cavity 23 between the adjacent battery packs 21. In this way, it is possible to avoid the situation that the busbar 22 is located outside the system battery module 2, and once squeezing and collision occur, it is easy to cause a short circuit of the busbar 22.

It should be noted that the accommodating cavity 23 is the accommodating cavity 23 between adjacent battery packs 21 and can be in three situations. In the first case, the adjacent battery packs 21 are connected in series with each other, and the accommodation cavity 23 is formed between the adjacent battery packs 21 of the same type or different types connected in series with each other. In the second case, in view of the fact that the busbars 22 on the existing battery packs 21 are arranged on the same side of one row of the battery packs 21, for example, the first battery pack 21, the second battery pack 21, the third battery pack 21, and the fourth battery pack 21 are arranged in two rows, the busbars 22 may also be located in the accommodation cavity 23 between the two rows of the battery packs 21. Since the busbars 22 are arranged between the two rows of battery packs 21, that is, the busbars 22 is also disposed inside the system battery module 2, the busbar 22 is avoided from being squeezed outside the system battery module 2 and causing a short circuit, and the busbar 22 in the system battery module 2 can also be protected. In the third case, when the plurality of the battery packs 21 in the system battery module 2 are arranged in a multi-layer structure, the accommodating cavity 23 formed between the multi-layer battery packs 21 can also accommodate the busbar 22, and can also protect the busbar 22 in the system battery module 2.

In the present application, each battery pack 21 in the system battery module 2 is connected, forming an accommodating cavities between adjacent battery packs, and arranging the necessary busbars for connecting the adjacent battery packs in the accommodating cavity. The busbars replace the traditional arrangement of busbars on both sides of the system battery module, which can protect the busbars from collision and extrusion in the event of a vehicle collision, thereby ensuring the safety of the system battery module.

In some embodiments of the present application, referring to FIG. 2, FIG. 2 is a schematic structural diagram of a power battery system including a battery energy distributing module provided by an embodiment of the present application. The power battery system also includes a battery energy distributing module 3 connected to the system battery module 2 and an interface component provided on a surface of the battery case 1. The interface component is connected to the battery energy distributing module 3. The interface component includes a first front-drive positive interface 11, a first front-drive negative interface 12, a first rear-drive positive interface 13, a rear-drive negative interface 14, a first charging positive interface 15, and a first charging negative interface 16.

The battery energy distributing module 3, the first rear-drive positive interface 13, the first rear-drive negative interface 12, the first charging positive interface 15, and the first charging negative interface 16 are located at one end of the system battery module 2. The first front-drive positive interface 11 and the first front-drive negative interface 12 are located at another end of the system battery module 2. The battery energy distributing module 3, the first front-drive positive interface 11, and the first front-drive negative interface 12 are connected through a connecting row. The connecting row is located in the accommodating cavity 23.

In the present application, the battery energy distributing module 3, the first rear-drive positive interface 13, and the first front-drive negative interface 12 are arranged at one end of the system battery module 2, and the first front-drive positive interface 11 and the first front-drive negative interface 12 are arranged on the other end of the system battery module 2, which facilitates to form connection with a shortest connecting wiring between the front-drive component and the rear-drive component of the new energy vehicle and the system battery module 2.The connecting wiring between the front-drive component and the rear-drive component of the new energy vehicle and the system battery module 2 is arranged in the accommodating cavity 23, instead of outside the system battery module 2, which can prevent collision, and a good protection to the connecting lines between both the first front drive positive interface 11 and the first front drive negative interface 12 and the system battery module 2 can be achieved.

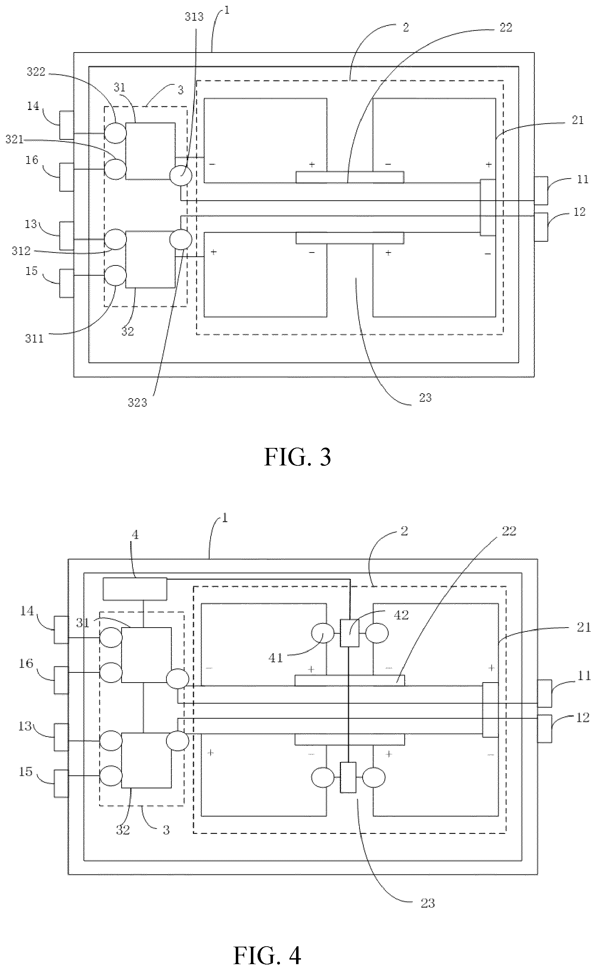

In some embodiments of the present application, referring to FIG. 3, FIG. 3 is a schematic structural diagram of a power battery system including a positive battery energy distributing module and a negative battery energy distributing module provided by an embodiment of the present application. The battery energy distributing module 3 includes a positive battery energy distributing unit 31 and a negative battery energy distributing unit 32. The positive battery energy distributing unit 31 is arranged adjacent to and connected to the positive electrode of the system battery module 2. The negative battery energy distributing unit 32 is arranged adjacent to and connected to a negative electrode of the system battery module 2.

In the present application, by dividing the battery energy distributing module 3 into a positive battery energy distributing unit 31 and a negative battery energy distributing unit 32, the components connected to the positive electrode of the system battery module 2 and the components connected to the negative electrode of the system battery module 2 within the battery energy distribution module 3 can be separated, and the risk of short circuit can be avoided as much as possible.

In some embodiments of the present application, the positive battery energy distributing unit 31 is provided with a second positive charging interface 311, a second positive rear-drive interface 312, and a second front-drive positive interface 313. The second positive charging interface 311 is set toward the first positive charging interface 15. The second rear-drive positive interface 312 is set towards the first rear-drive positive interface 13. The second front-drive positive interface 313 is set towards the first front-drive positive interface 11.

In some embodiments of the present application, the negative battery energy distributing unit 32 is provided with a second charging negative interface 321, a second rear-drive negative interface 322, and a second front-drive negative interface 323. The second charging negative interface 321 is set toward the first charging negative interface 16. The second rear-drive negative interface 322 is set toward the first rear-drive negative interface 14. The second front-drive negative interface 323 is set toward the first front-drive negative interface 12.

In the present application, by arranging the second front-drive negative interface 323 on the negative battery energy distributing unit 32 toward the first front-drive positive interface 11 and the first front-drive negative interface 12 on the battery case 1, arranging the second charging negative interface 321 and the second rear-drive negative interface 322 away from the first front-drive positive interface 11 and the first front-drive negative interface 12, arranging the second front-drive positive interface 313 on the positive battery energy distributing unit 31 toward the first front-drive positive interface 11 and the first front-drive negative interface 12 on the battery case 1, and arranging the second charging positive interface 311 and the second rear-drive positive interface 312 away from the first front-drive positive interface 11 and the first front-drive negative interface 12. The first front-drive positive interface 11 and the first front-drive negative interface 12 can reduce the wiring complexity of the connection lines between each interface on the battery energy distributing module 3 and the corresponding interface on the battery case 1, and reduce the wiring cost.

In some embodiments of the present application, the first rear-drive positive interface 13 and the first charging positive interface 15 are located on the side of the positive battery energy distributing unit 31 away from the first front-drive positive interface 11. The first rear-drive negative interface 14 and the first charging negative interface 16 are located on the side of the positive battery energy distributing unit 31 away from the first front-drive positive interface 11. The charging negative interface 16 is located on one side of the negative battery energy distributing unit 32 away from the front-drive negative interface 12.

By locating the first-rear drive positive interface 13 and the first charging positive interface 15 on the same side of the positive battery energy distribution unit 31, and locating the first rear-drive negative interface 14 and the first charging negative interface 16 on the same side of the negative battery energy distribution unit 32, the positive and negative interfaces on the battery case 1 and interfaces on the battery energy distribution module 3 are separated to avoid an short circuit easily occurred once collision happened due to a mutual intertwining of the positive and negative connecting lines between interfaces on the battery case 1 and interfaces on the battery energy distribution module 3, and to realize an effect of simple.

In some embodiments of the present application, referring to FIG. 4, FIG. 4 is a schematic structural diagram of a power battery system including a battery management system control unit provided by an embodiment of the present application. The power battery system further includes a battery management system control unit. The battery management system control unit includes a battery management system main control module 4, an acquisition interface of any one or a combination of voltage and temperature 41, and a battery management system slave control module 42. The acquisition interface of any one or a combination of voltage and temperature 41 is provided outside the plurality of the battery packs 21. The acquisition interface of any one or a combination of voltage and temperature 41 and a plurality of the battery management system slave control modules 42 are located in the accommodating cavity 23. The battery management system slave control module 42 is communicatively connected to The acquisition interface of any one or a combination of voltage and temperature 41. The he plurality of the battery management system slave control modules 42 are communicatively connected to the battery management system main control module 4.

In the present application, the battery management system control module is divided into the battery management system main control module 4 and the battery management system slave control module 42. The battery management system slave control module 42 is arranged close to The acquisition interface of any one or a combination of voltage and temperature 41. The present application uses The acquisition interface of any one or a combination of voltage and temperature 41 collects the temperature of the battery pack 21, and then transmits the collected data to the battery management system main control module 4 through the battery management slave control module 42. Since the battery temperature collection wire harness between The acquisition interface of any one or a combination of voltage and temperature 41 and the battery management slave control module 42 is extremely short, so the accuracy of the battery temperature collection wire harness can be greatly improved, the cost of the battery temperature collection wire harness can be reduced, and the layout space of the battery temperature collection wire harness can be reduced.

In some embodiments of the present application, adj acent battery management system slave control modules 42 are communicatively connected to each other. One of the plurality of battery management system slave control modules 42 is communicatively connected to the battery management system main control module 4.

In the present application, the battery management system slave control module 42 and the battery management system main control module 4 are connected through a communication control wire harness. Adjacent two battery management system slave control modules 42 are firstly connected through a communication wire harness, and the battery management system slave control module 42 closest to the battery management system main control module 4 is connected to the battery management system main control module 4, thereby reducing the length of the communication control wire harness between the battery management system main control module 4 and the battery management system slave control module 42. In addition, the wiring harness arrangement between the battery management system master control module 4 and the battery management system slave control module 42 can be made simpler and neater, and staggered situation will not occur, the wiring harness cost and wiring space can be reduced, and the connection between the wiring harnesses can be facilitated, and the connection labor cost and the maintenance cost between the connection wiring harnesses can be reduced.

In some embodiments of the present application, the acquisition interface of any one or a combination of voltage and temperature 41 of the adjacent battery packs 21 are located in the same accommodating cavity 23 and are connected to the same battery management system slave control module 42. The acquisition interface of any one or a combination of voltage and temperature 41 are respectively located on opposite sides of the control module 42 in the battery management system.

It can be understood that since the acquisition interface of any one or a combination of voltage and temperatures of the adjacent battery packs 21 are set in the same accommodating cavity 23 and the adjacent battery packs 21 are different battery models, the battery packs 21 can be configured in two types in the entire circuit, model.

In the present application, by arranging the acquisition interface of any one or a combination of voltage and temperature 41 of two adjacent battery packs 21 in the same accommodating cavity 23, and the acquisition interface of any one or a combination of voltage and temperature 41 of the two adjacent battery packs 21 can share a battery management system, which can save the material cost of the battery management system slave control module 42 and the layout space of the battery management system slave control module 42.

In some embodiments of the present application, the battery energy distributing module 3 includes a positive battery energy distributing unit 31 and a negative battery energy distributing unit 32. The battery management system main control module 4 is located close to the negative battery energy distributing unit 32.

Since the negative battery energy distributing unit 32 contains a current sensor, and the current sensor needs to be connected to the battery management system main control module 4, the present application reduces the wiring length between the current sensor and the battery management system main control module 4 by arranging the battery management system main control module 4 close to the negative battery energy distributing unit 32, the current collection accuracy of the current sensor is greatly improved, and the battery management system main control module 4 control the current energy distributing module more accurately.

In some embodiments of the present application, the positive battery energy distributing unit 31 and the negative battery energy distributing unit 32 are communicatively connected. The battery management system main control module 4 is disposed on one side of the negative battery energy distributing unit 32 away from the positive battery energy distributing unit 31. The battery management system main control module 4 is communicatively connected to the negative battery energy distributing unit 32.

It should be noted that the positive battery energy distributing unit 31, the negative battery energy distributing unit 32 and the battery management system main control module 4 are connected through a communication harness, which belongs to weak current control, so it needs to be kept away from the high-voltage power supply harness to avoid short circuits and damage to the battery management system main control module 4 of the battery management system.

It can be understood that a communication control interface of the positive battery energy distributing unit 31 is on the upper part of the positive battery energy distributing unit 31. The negative electrode battery energy distribution unit 32 and the positive electrode battery energy distribution unit 31 are connected with a communication interface on the side of the negative electrode battery energy distribution unit 32 facing the positive electrode battery energy distribution unit 31. The communication interface connecting the positive battery energy distributing unit 31 and the negative battery management system energy distributing unit 32 is set toward the negative battery energy distributing unit 32. So that the communication control harness can be separated from the high-voltage busbar to avoid interference. At the same time, the cost of communication wiring harness is saved.

In the present application, by arranging the battery management system main control module 4 in the side of the negative battery energy distributing unit 32 away from the positive battery energy distributing unit 31, the battery management system main control module 4 can be kept away from the positive battery energy distributing unit 31 and thus away from the high-voltage busbar, thus improving the efficiency of the battery management system. The safety of the battery management system controls module, thus improving the power supply safety of the entire system battery.

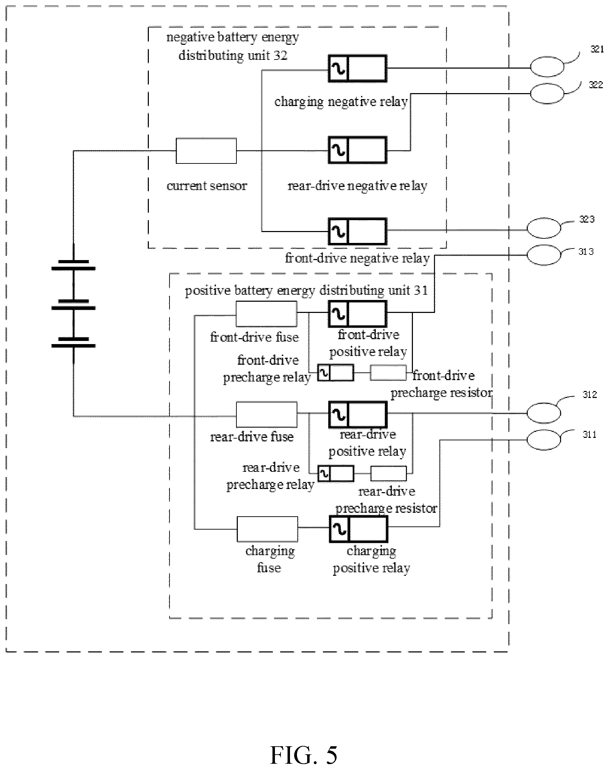

Referring to FIG. 5, FIG. 5 is a schematic structural diagram of the internal device connections between the positive battery energy distributing module and the negative battery energy distributing module provided by the embodiment of the present application. The negative battery energy distributing unit 32 includes a negative battery energy distributing case. The positive battery energy distributing unit 31 includes a positive battery energy distributing case.

A current sensor, a charging negative relay, a rear-drive negative relay, and a front-drive negative relay are distributed in the negative battery energy distributing case. One end of the current sensor is connected to the negative electrode of the system battery module 2. The other end of the current sensor is connected to the charging negative relay and the rear-drive negative relay respectively. One end of the relay is connected to the front-drive negative relay. The other end of the charging negative relay is connected to the second charging negative interface 321 on the negative battery energy distributing unit 32. The other end of the rear-drive negative relay is connected to the second rear-drive connector on the negative battery energy distributing unit 32. The negative interface 322 is connected, and the other end of the precursor negative relay is connected to the second precursor negative interface 323 on the negative battery energy distributing unit 32.

A front-drive positive relay, a front-drive fuse, a front-drive precharge relay, a front-drive precharge resistor, a rear-drive positive relay, a rear-drive fuse, a rear-drive precharge relay, a rear-drive precharge resistor, a charging positive relay, and a charging fuse are distributed in the positive battery energy distributing case. he front-drive relay and the front-drive fuse are connected in series to form a front-drive circuit, the front-drive precharge relay and the front-drive precharge resistor are connected in series and connected to both ends of the front-drive positive relay, and the rear-drive positive relay is connected in series with the rear-drive fuse to form a rear-drive circuit; wherein the rear-drive precharge relay and the rear-drive precharge resistor are connected in series and connected to both ends of the rear-drive positive relay, and the charging positive relay is connected in series with the charging fuse to form a charging circuit. The front-drive circuit, the rear-drive circuit, and the charging circuit each have one end connected in parallel with both ends of the positive electrode of the system battery module 2. The other ends of the front-drive circuit, the rear-drive circuit, and the charging circuit each is connected to the second front-drive positive interface 313 and the positive battery energy on the positive battery energy distributing unit 31. The second rear-drive positive interface 312 on the distributing unit 31 and the second charging positive interface 311 on the positive battery energy distributing unit 31.

The basic concepts have been described above. It is obvious to those skilled in the art that the above detailed disclosure is only an example and does not constitute a limitation of the present application. Although not explicitly stated herein, those skilled in the art may make various modifications, improvements, and corrections to this application. Such modifications, improvements and corrections are suggested in this application, so such modifications, improvements and corrections still fall within the spirit and scope of the exemplary embodiments of the present application. At the same time, this application uses specific words to describe the embodiments of the present application.

For example, any one or a combination of at least two of "one embodiment", "an embodiment", and "some embodiments" means a certain feature, structure or characteristic related to at least one embodiment of the present application. Therefore, it should be emphasized and noted that "one embodiment" or "an embodiment" or "an alternative embodiment" mentioned twice or more at different places in the present specification does not necessarily refer to the same embodiment. In addition, certain features, structures or characteristics in one or more embodiments of the present application may be appropriately combined.

Similarly, it should be noted that, in order to simplify the presentation of the disclosure of the present application and thereby facilitate understanding of one or more embodiments of the present application, in the foregoing description of the embodiments of the present application, multiple features are sometimes combined into one embodiment. accompanying drawings or descriptions thereof. However, this method of disclosure does not imply that the subject matter of the application requires more features than are mentioned in the claims. In fact, embodiments may have less than all features of a single disclosed embodiment.

Each patent, patent application, patent application publication and other material cited in this application, such as articles, books, instructions, publications, documents, etc., is hereby incorporated by reference into this application in its entirety, to the extent that it is inconsistent with the content of this application. Application history documents that are inconsistent or conflicting are excluded, as are documents (currently or later appended to this application) that limit the broadest scope of the claims of the present application. It should be noted that if there is any inconsistency or conflict between the descriptions, definitions, and/or use of terms in the appended materials of this application and the content of the present application, the description, definitions, and/or use of terms in the present application shall prevail.

## Claims

1. A power battery system, comprising a battery case (1) and a system battery module (2) fixed inside the battery case (1), wherein the system battery module (2) comprises a plurality of battery packs (21), adjacent two of the plurality of battery packs (21) are connected through a busbar (22) and are spaced apart to form an accommodating cavity (23), and the busbar (22) connected between the adjacent battery packs is located in the accommodating cavity (23).

2. The power battery system according to claim 1, further comprising a battery energy distributing module (3) connected to the system battery module (2), and an interface component provided on a surface of the battery case (1), wherein the interface component is connected to the battery energy distributing module (3); the interface component comprises a first front-drive positive interface (11), a first front-drive negative interface (12), a first rear-drive positive interface (13), a rear-drive negative interface (14), a first charging positive interface (15), and a first charging negative interface (16); and the battery energy distributing module (3), the first rear-drive positive interface (13), the first rear-drive negative interface (14), the first charging positive interface (15), and the first charging negative interface (16) are located at one end of the system battery module (2); and wherein the first front-drive positive interface (11) and the first front-drive negative interface (12) are located at another end of the system battery module (2); the battery energy distributing module (3), the first front-drive positive interface (11), and the first front-drive negative interface (12) are connected through a connecting row; and the connecting row is located in the accommodating cavity(23).

3. The power battery system according to claim 2, wherein the battery energy distributing module (3) comprises a positive battery energy distributing unit (31) and a negative battery energy distributing unit (32), the positive battery energy distributing unit (32) is arranged adjacent to and connected to a positive electrode of the system battery module (2), and the negative battery energy distributing unit (32) is arranged adjacent to and connected to a negative electrode of the system battery module (2).

4. The power battery system according to claim 3, wherein the positive battery energy distributing unit (31) is provided with a second charging positive interface (311), a second rear-drive positive interface (312), and a second front-drive positive interface (313); wherein the second charging positive interface (311) is set toward the first charging positive interface (15), the second rear-drive positive interface (312) is set toward the first rear-drive positive interface (13), and the second front-drive positive interface (313) is set toward the first front-drive positive interface (11).

5. The power battery system according to claim 3, wherein the first rear-drive positive interface (13) and the first charging positive interface (15) are located on one side of the positive battery energy distributing unit (31) away from the first front-drive positive interface (11), and the first rear-drive negative interface (14) and the first charging negative interface (16) are located on one side of the negative battery energy distributing unit (32) away from the front-drive negative interface (12).

6. The power battery system according to any one of claims 1 to 5, comprising a battery management system control unit, wherein the battery management system control unit comprises a battery management system main control module (4), an acquisition interface of any one or a combination of voltage and temperature (41), and a plurality of battery management system slave control modules (42); wherein the acquisition interface of any one or a combination of voltage and temperature (41) is provided outside the plurality of the battery packs (21), the acquisition interface of any one or a combination of voltage and temperature (41) and the battery management system slave control module (42) are located in the accommodating cavity (23), the battery management system slave control module (42) is communicatively connected to the acquisition interface of any one or a combination of voltage and temperature (41), and the plurality of the battery management system slave control modules (42) are communicatively connected to the battery management system main control module (4).

7. The power battery system according to claim 6, wherein the adjacent two of the battery management system slave control modules (42) are communicatively connected to each other, one of the battery management system slave control modules (42) is communicatively connected to the battery management system main control module (4).

8. The power battery system according to claim 6, wherein the acquisition interface of any one or a combination of voltage and temperatures (41) for the adjacent two battery packs (21) are located in the same accommodating cavity (23) and connected to the same battery management system slave control module (42), and the acquisition interface of any one or a combination of voltage and temperatures (41) are located on opposite sides of the battery management system slave control module (42).

9. The power battery system according to claim 6, wherein the battery energy distributing module (3) comprises a positive battery energy distributing unit (31) and a negative battery energy distributing unit (32), and the battery management system main control module (4) is disposed close to the negative battery energy distributing unit (32).

10. The power battery system according to claim 9, wherein the positive battery energy distributing unit (31) is communicatively connected to the negative battery energy distributing unit (32), the battery management system main control module (4) is disposed on one side of the negative battery energy distributing unit (32) away from the positive battery energy distributing unit (31), and the battery management system main control module (4) is communicatively connected to the negative battery energy distributing unit (32).

11. The power battery system according to claim 4, wherein the negative battery energy distributing unit (32) comprises a negative battery energy distributing case in which a current sensor, a charging negative relay, a rear-drive negative relay, and a front-drive negative relay are distributed, one end of the current sensor is connected to the negative electrode of the system battery module (2), and the other end of the current sensor is connected to one end of the charging negative relay, the rear-drive negative relay, and the front-drive negative relay respectively; and wherein the other end of the charging negative relay is connected to the second charging negative interface (321) on the negative battery energy distributing unit (32), the other end of the rear-drive negative relay is connected to the second rear-drive negative interface (322) on the negative battery energy distributing unit (32), and the other end of the front-drive negative relay is connected to the negative battery energy distributing unit (323) on the negative battery energy distributing unit (32).

12. The power battery system according to any one of claims 3 to 4, wherein the negative battery energy distributing unit (32) is provided with a second charging negative interface (321), a second rear-drive negative interface (322), and a second front-drive negative interface (323); wherein the second charging negative interface (321) is set toward the first charging negative interface (16), the second rear-drive negative interface (322) is set toward the first rear-drive negative interface (14), and the second front-drive negative interface (323) is arranged towards the front-drive negative interface (12).

13. The power battery system according to any one of claims 3 to 4, wherein the negative battery energy distributing unit (32) is provided with a second charging negative interface (321), a second rear-drive negative interface (322), and a second front-drive negative interface (323); wherein the second charging negative interface (321) is set toward the first charging negative interface (16), the second rear-drive negative interface (322) is set toward the first rear-drive negative interface (14), and the second front-drive negative interface (323) is arranged towards the front-drive negative interface (12).

14. The power battery system according to any one of claims 4 to 11, wherein the positive battery energy distributing unit (31) comprises a positive battery energy distributing case; a front-drive positive relay, a front-drive fuse, a front-drive precharge relay, a front-drive precharge resistor, a rear-drive positive relay, a rear-drive fuse, a rear-drive precharge relay, a rear-drive precharge resistor, a charging positive relay, and a charging fuse are distributed in the positive battery energy distributing case; and the front-drive relay and the front-drive fuse are connected in series to form a front-drive circuit, the front-drive precharge relay and the front-drive precharge resistor are connected in series and connected to both ends of the front-drive positive relay, and the rear-drive positive relay is connected in series with the rear-drive fuse to form a rear-drive circuit; wherein the rear-drive precharge relay and the rear-drive precharge resistor are connected in series and connected to both ends of the rear-drive positive relay, and the charging positive relay is connected in series with the charging fuse to form a charging circuit; wherein the front-drive circuit, the rear-drive circuit, and the charging circuit each has an end connected in parallel with both ends of the positive electrode of the system battery module (2), and the other ends of the front-drive circuit, the rear-drive circuit, and the charging circuit each is connected to the second front-drive positive interface (313) on the positive battery energy distributing unit (31), the second rear-drive positive interface (312) on the positive battery energy distributing unit (31), and the second charging positive interface (311) on the positive battery energy distributing unit (31).

15. The power battery system according to any one of claims 4 to 11, wherein the positive battery energy distributing unit (31) comprises a positive battery energy distributing case; a front-drive positive relay, a front-drive fuse, a front-drive precharge relay, a front-drive precharge resistor, a rear-drive positive relay, a rear-drive fuse, a rear-drive precharge relay, a rear-drive precharge resistor, a charging positive relay, and a charging fuse are distributed in the positive battery energy distributing case; and the front-drive relay and the front-drive fuse are connected in series to form a front-drive circuit, the front-drive precharge relay and the front-drive precharge resistor are connected in series and connected to both ends of the front-drive positive relay, and the rear-drive positive relay is connected in series with the rear-drive fuse to form a rear-drive circuit; wherein the rear-drive precharge relay and the rear-drive precharge resistor are connected in series and connected to both ends of the rear-drive positive relay, and the charging positive relay is connected in series with the charging fuse to form a charging circuit; wherein the front-drive circuit, the rear-drive circuit, and the charging circuit each have one end connected in parallel with both ends of the positive electrode of the system battery module (2), and the other ends of the front-drive circuit, the rear-drive circuit, and the charging circuit each connected to the second front-drive positive interface (313) on the positive battery energy distributing unit (31), the second rear-drive positive interface (312) on the positive battery energy distributing unit (31), and the second charging positive interface (311) on the positive battery energy distributing unit (31).
